# EUROPEAN PATENT SPECIFICATION

(11) **EP 0 437 321 B1**
(45) Date of publication and mention of the grant of the patent: **27.08.1997**
(21) Application number: 91300055.0
(22) Date of filing: 04.01.1991
(51) Int. Cl.: H04N 5/92, G11B 27/036

(54) **Apparatus for recording a digital signal**
Gerät zum Aufnehmen eines digitalen Signals
Dispositif pour l'enregistrement d'un signal numérique

(30) Priority: 09.01.1990 JP 2384/90; 03.07.1990 JP 176070/90
(43) Date of publication of application: 17.07.1991
(73) Proprietor: SONY CORPORATION, Tokyo 141 (JP)
(72) Inventor: Kanota, Keiji, Patents Div.Sony Corp., Shinagawa-ku, Tokyo 141 (JP)
(74) Representative: Cotter, Ivan John

(56) References cited:
- EP-A- 0 327 188
- EP-A- 0 344 754
- US-A- 4 630 132
- PATENT ABSTRACTS OF JAPAN vol. 10, no. 177 (P-470)21 June 1986 & JP-A-61 024 062
- "The art of digital video", John Watkinson, first edition, Focal Press, London, 1990

## Description

This invention relates to apparatus for recording a digital signal.

A digital signal recording and reproducing apparatus has been developed in which a video signal, for example, is converted into a digital signal and recorded on and reproduced from a tape using a rotary head. In such an apparatus, the digital signal recorded and reproduced is generally divided into digital signals of a plurality of channels each of which is recorded and reproduced by a respective head. In that case, a plurality of heads corresponding to the plurality of channels are integrally formed as one body so that they can easily be mounted on a head drum.

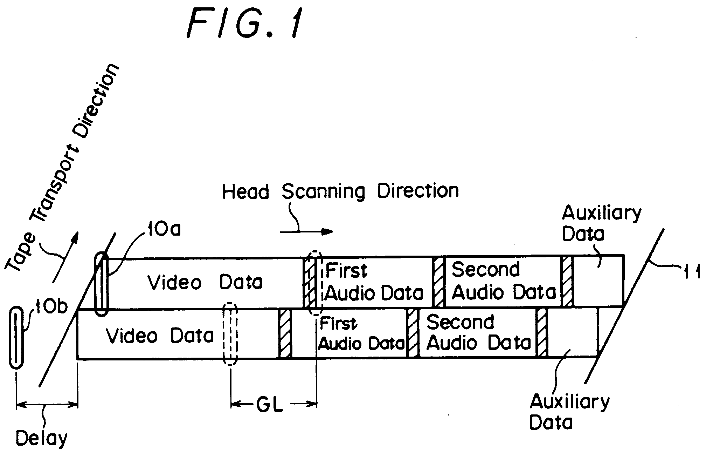

In a recording format formed on the tape, signals are always recorded at constant positions in tracks on the tape as, for example, shown in Figure 1. This is to utilize the tape effectively. For this reason, in the head body, a signal recorded by a succeeding head in the scanning direction is supplied with a delay time corresponding to a level difference in the scanning direction of the heads.

When such as apparatus is utilized as a video tape recorder, video signal data and audio signal data are recorded in separate recording areas. In that case, data of respective signals must be independently recorded, so that video signal data and audio signal data can be independently recorded, or so that the audio signal can be recorded in a so-called after-recording mode.

However, in a head body in which the plurality of heads are integrally formed, it is very difficult to place only the head of one selected channel in the recording mode, due to cross-talk or the like.

Consequently, when the audio signal is recorded in the after-recording mode, one head is still located in the recording area of the video signal when the succeeding head, for example, reaches the start portion of the recording area of audio signal data and begins to record the audio signal data. If the recording is started at that time, there is some risk of a deleterious effect on the video signal data. Such apparatus cannot therefore perform after-recording of respective signals satisfactorily.

US Patent US-A-4 630 132 discloses a video tape recorder comprising two rotary heads located with predetermined spacings in both a track pitch direction and a head scanning direction and integrally formed as one body, and record means for supplying the rotary heads with video and audio information to be recorded on tracks on a magnetic tape. As described with reference to Figs. 17 to 19 of US-A-4 630 132, a video signal to be recorded is subjected to luminance/chrominance separation, and left and right audio signals are added to the separated luminance and chrominance signals, respectively. The resultant added signals are supplied to the heads, one of which forms a track comprising sequential luminance and left audio areas and the other of which forms a track comprising sequential chrominance and right audio areas.

European Patent Application Publication EP-A-0 327 188 discloses a method of recording computer data on a tape, the method employing two rotary heads and record means for supplying the rotary heads with computer data to be recorded on tracks on a magnetic tape. Each track comprises a main area on which the computer data is recorded. Each track also comprises, at both the start and end portions thereof, a marginal area, a sub area, and an automatic track following area.

A D2-recorder is known. D2 recorders are described in "The Art of Digital Video" by John Walkinson 1st Edition, Focal Press, London; published in 1990.

A D2-recorder has a scanner having a pair of rotary heads, one of each azimuth type. The heads are staggered or offset by 4.22° around the scanner and spaced apart in the track pitch direction to scan different tracks. As stated in "The Art of Digital Video", "The angular separation between the heads in a pair means that compensation is also necessary in the timing with which one head begins to write with respect to the other. In helical recording the start points of successive tracks are staggered, and the timing difference takes into account the track stagger and the head stagger. The data to be recorded by each head will be available in an interleave memory, and the timing difference is easily accommodated by reading the memory at different times for each head."

Audio and video information are time-division-multiplexed together and recorded in the tracks.

According to the invention there is provided a video tape recorder comprising: a video tape recorder comprising: a pair of rotary heads located with a predetermined spacing in a track pitch direction and a predetermined distance GL in a head scanning direction and integrally formed as one body to define adjacent tracks on a magnetic tape the tracks having starting points which differ by a distance d in the head scanning direction; and record means for supplying the rotary heads with auxiliary, video and audio information to be recorded on the tracks on the magnetic tape; the record means comprising: means for producing a first digital signal comprising video and audio data arranged sequentially in a time-division manner; and means for producing a second digital signal representing auxiliary data; multiplexing means for dividing said first and second digital signals into plural channel signals to be recorded on respective track on the tape by respective one of the rotary heads whereby each track comprises sequentially recorded auxiliary, video and audio data areas, the said auxiliary data signal being confined to the start portion of length (GL-d) in the head scanning direction of the track formed by a preceding one of the rotary heads and to the end portion of length (GL-d) in the head scanning direction of the track formed by the succeeding one of the rotary heads the video recording areas and the audio recording areas on the adjacent tracks being spaced by (GL-d) in the head scanning direction.

An embodiment of the present invention described hereinbelow provides a digital signal recording and reproducing apparatus in which an arbitrary recording signal can be recorded in a so-called after-recording mode, without affecting other signals.

The invention will now be described by way of example with reference to the accompanying drawings, throughout which like parts are referred to by like references, and in which:
Figure 1 is a diagram showing a recorded pattern of a digital signal;
Figure 2 (formed of Figures 2A and 2B) is a block diagram showing an embodiment of digital signal recording and reproducing apparatus according to the present invention;
Figure 3 is a schematic diagram showing a head arrangement;
Figure 4 is a diagram showing a recorded pattern of a digital signal;
Figures 5A to 5E are timing charts.

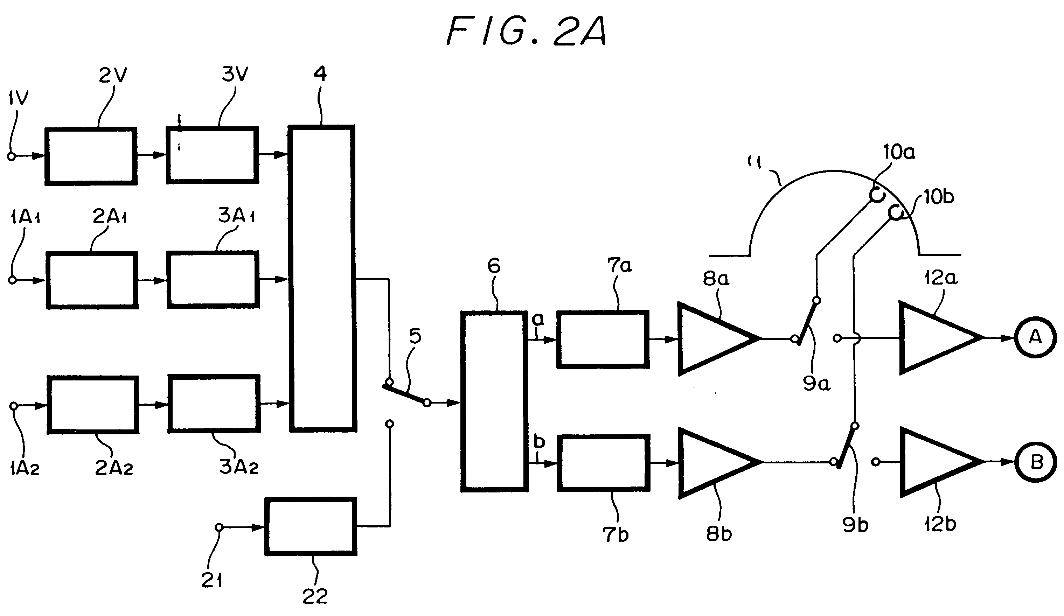

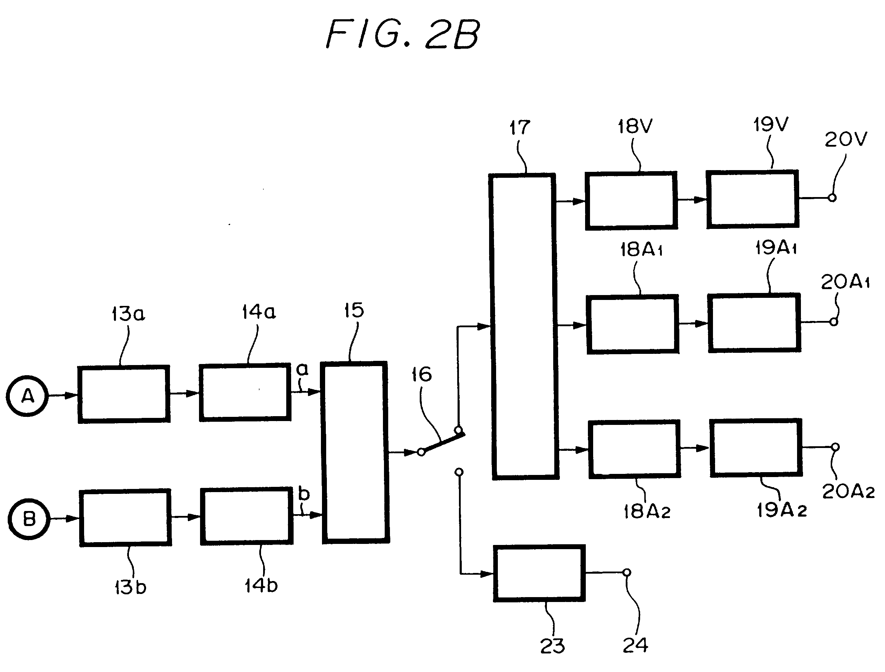

As shown in Figure 2, in the embodiment of digital signal recording and reproducing apparatus, a video signal is supplied to an input terminal 1V, a first audio signal is supplied to an input terminal 1A1, and a second audio signal is supplied to an input terminal 1A2. The video signal and first and second audio signals supplied to the input terminals 1V, 1A1 and 1A2 are supplied to analogue-to-digital (A/D) converters 2V, 2A1 and 2A2, in which they are converted into respective digital signals. These digital signals are supplied to parity generating circuits 3V, 3A1 and 3A2 which add parity codes. The resulting signals with parity codes are supplied to a signal synthesizing circuit 4, in which they are sequentially synthesized in a time-division manner to provide a single main data signal which is supplied through a switch 5 to a multiplexer 6.

In the multiplexer 6, the main data signal supplied thereto is separated into signals of, for example, two channels. These separated signals are respectively supplied to recording circuits 7a and 7b, in which they are processed in a predetermined signal processing fashion such as a code conversion to provide recording signals a and b. The recording signals a and b are supplied through recording amplifiers 8a and 8b, and recording and reproduction change-over switches 9a and 9b to heads 10a and 10b which may have different azimuth angles and form a unitary rotary head, thereby being recorded on a tape 11.

Upon reproduction, the signals reproduced from the tape 11 by the heads 10a and 10b are supplied through the switches 9a and 9b, and reproducing amplifiers 12a and 12b to reproducing circuits 13a and 13b, in which they are processed in a predetermined signal processing manner such as code conversions reverse to those of the above-mentioned recording circuits 7a and 7b, to re-convert the signals a and b of the respective channels. The re-converted signals a and b are supplied through timebase-compressing circuits 14a and 14b to a demultiplexer 15.

In the demultiplexer 15, the signals a and b of two channels supplied thereto are synthesized together to provide a single main data signal. This main data signal is supplied through a switch 16 to a signal separating circuit 17, in which it is separated to provide the signals synthesized in the above-mentioned time-division manner, that is, the digital signals of the video signal and first and second audio signals. The separated signals are respectively supplied to error correcting circuits 18V, 18A1 and 18A2. In the error correcting circuits 18V, 18A1 and 18A2, error corrections are performed by utilizing the added parity codes, and the error-corrected digital signals are respectively supplied to digital-to-analogue (D/A) converters 19V, 19A1 and 19A2, in which they are converted into analogue signals and fed to output terminals 20V, 20A1 and 20A2, respectively.

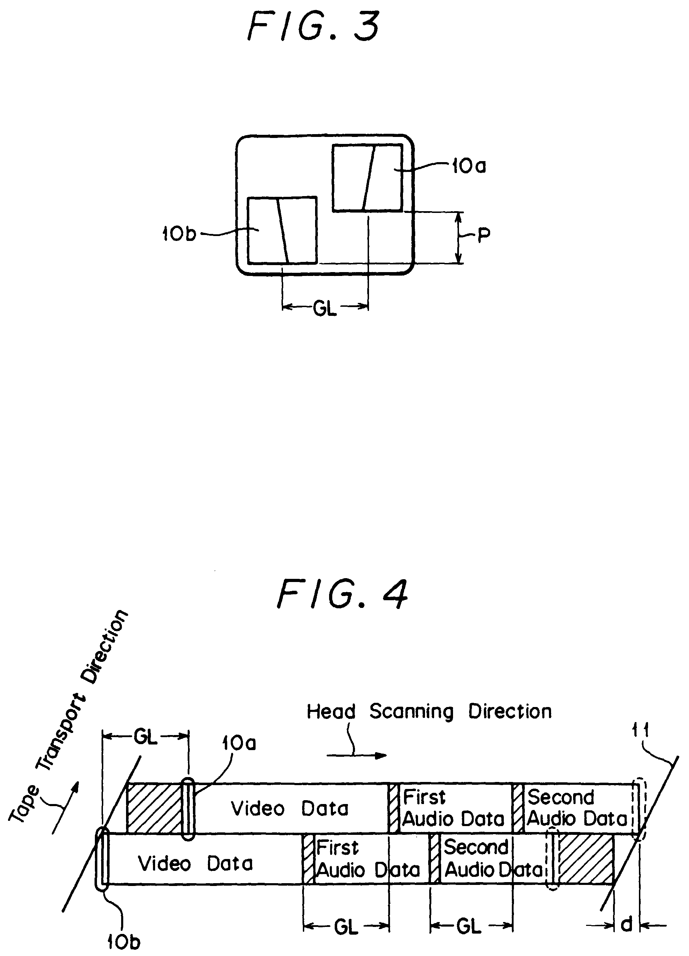

In this apparatus, the heads 10a and 10b are integrally formed as one body and arranged as, for example, shown in Figure 3. A level difference P corresponding to a track pitch is provided between the heads 10a and 10b, and a predetermined level difference GL is provided in the head scanning direction in order to avoid the influence of cross-talk or the like. Then, the head assembly formed of the heads 10a and 10b is rotated and the tape 11 is transported along the rotating circumferential surface of the head assembly, whereby the recorded pattern is formed on the tape 11 as shown in Figure 4.

In this recorded pattern, the respective signals are recorded on the tape 11 with the distance GL corresponding to the level difference of the scanning direction so that, when the heads 10a and 10b scan the tape 11, the heads 10a and 10b reach the recording areas of the respective signals simultaneously. Accordingly, respective signals can be recorded in the after-recording mode or the like without affecting other signals.

More specifically, the signals to be processed in the after-recording mode are supplied to the input terminals 1V, 1A1 and 1A2 and the recording apparatus is placed in the recording mode only in the period of the recording area of the signal, whereby this signal can be recorded without affecting other signals.

In this recording pattern, in the start portion of the track formed by the head 10a and shown by a hatched area in Figure 4, the head 10a is in contact with the tape 11 and the head 10b is not yet in contact with the tape 11. On the other hand, in the end portion of the track formed by the head 10b and shown by a hatched area in Figure 4, the head 10b is in contact with the tape 11 and the head 10a is distant from the tape 11. Accordingly, in these hatched areas shown in Figure 4, even when the heads 10a and 10b are placed in the recording mode, only the corresponding tracks are affected, respectively.

Accordingly, in this apparatus, an auxiliary data signal is applied to an input terminal 21 as shown in Figure 2, and is supplied to a parity generating circuit 22, in which the auxiliary data signal has added a parity code used to perform the error correction which will be described later. This auxiliary data signal with the parity code is supplied through the switch 5 to the multiplexer 6. Further, a signal from the demultiplexer 15 is supplied through the switch 16 to an error correction circuit 23, and this signal is error-corrected by using the above-mentioned added parity code in the error correction circuit 23, an error-corrected auxiliary data signal being fed to an output terminal 24.

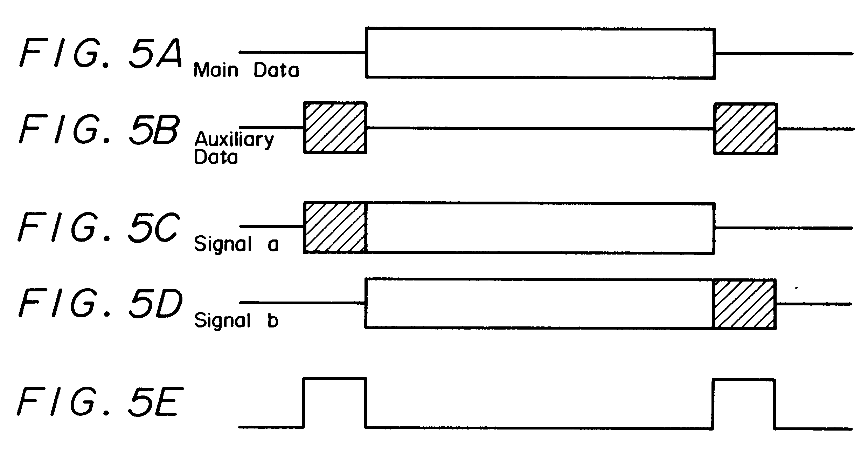

In the recording mode, for example, the signal synthesizing circuit 4 and the parity generating circuit 22 derive a main data signal with the parity code and an auxiliary data signal as shown, for example, in Figures 5A and 5B. These main and auxiliary signals are switched by the switch 5 and fed to the multiplexer 6. On the other hand, in the multiplexer 6, the signal supplied thereto is divided into the signals of two channels as shown in Figures 5C and 5D, and these divided signals are supplied to the heads 10a and 10b, respectively.

Thus, in the signal patterns recorded by the heads 10a and 10b, the recording of the signal in which the auxiliary signal is inserted into the hatched area is performed. In the rewriting mode of the auxiliary data signal, the digital signal recording apparatus is switched to the recording mode only in the period shown in the timing chart of Figure 5E, whereby the auxiliary data signal of this area can be rewritten without affecting other signals. Further, by performing an operation opposite to that of the recording mode, the main data signal and the auxiliary data signal can be reproduced.

As described above, since the signals are recorded with the delay time corresponding to the level difference in the scanning direction, the respective heads simultaneously reach the recording areas of the respective signals to that the respective signals can be recorded in the after-recording mode or the like without affecting other signals. Also, the recording area of the auxiliary data signal is determined in the area corresponding to the level difference of the scanning direction of the head from the end portion of the track with the result that the digital signal can be recorded and/or reproduced satisfactorily.

The length of the predetermined level difference GL is generally about 1 to 2 mm and the amount of auxiliary data, which can be recorded in this area, is 4 to 8 kilobits. In actual practice, the length of the above-mentioned hatched area is expressed as
GL - d where d is the amount by which the track position is shifted by the inclination of the tape (track). In this embodiment, the value of shift amount d is very small, that is, a fraction of GL. Further the auxiliary data signal may be recorded on any one of the tracks.

The above-described apparatus can be similarly embodied with more heads in a unitary body, such as more than three. In addition, any kinds of data such as video data, audio data, sub data and so on can be recorded in this auxiliary data recording area.

In the apparatus described, since the signals are recorded with a distance difference corresponding to the level difference of the heads in the scanning direction, the respective heads can reach the recording areas of the respective signals simultaneously, whereby the signals can be recorded in the after-recording mode or the like without affecting other signals. Also, since the recording area of auxiliary data is located in a range from the end portion of track to the level difference of the heads in the scanning direction, the tape can be effectively utilized and the digital signal can be recorded and reproduced satisfactorily.

## Claims

1. A video tape recorder comprising:
a pair of rotary heads (10a, 10b) located with a predetermined spacing in a track pitch direction and a predetermined distance GL in a head scanning direction and integrally formed as one body to define adjacent tracks on a magnetic tape (11) the tracks having starting points which differ by a distance d in the head scanning direction; and
record means (1 to 9, 21, 22) for supplying the rotary heads (10a, 10b) with auxiliary, video and audio information to be recorded on the tracks on the magnetic tape (11);
the record means comprising:
means (2 to 4) for producing a first digital signal comprising video and audio data arranged sequentially in a time-division manner; and
means (21, 22) for producing a second digital signal representing auxiliary data;
multiplexing means (5, 6) for dividing said first and second digital signals into plural channel signals (a, b) to be recorded on respective track on the tape (11) by respective one of the rotary heads (10a, 10b) whereby each track comprises sequentially recorded auxiliary, video and audio data areas, the said auxiliary data signal being confined to the start portion of length (GL-d) in the head scanning direction of the track formed by a preceding one (10a) of the rotary heads and to the end portion of length (GL-d) in the head scanning direction of the track formed by the succeeding one (10b) of the rotary heads the video recording areas and the audio recording areas on the adjacent tracks being spaced by (GL-d) in the head scanning direction.

2. Apparatus according to claim 1, wherein said predetermined distance in the head scanning direction is the distance between head gaps of adjacent heads (10a, 10b).

3. Apparatus according to claim 1 or claim 2, wherein the number of rotary heads (10a, 10b) is two and the azimuth angles of the rotary heads (10a, 10b) are different from each other.

## Patentansprüche

1. Videobandrekorder mit:
einem Paar Drehköpfen (10a, 10b), die mit einer vorbestimmten Beabstandung in einer Spurabstandsrichtung und einem vobestimmten Abstand GL in einer Kopfabtastrichtung angeordnet und als ein Körper einstückig ausgebildet sind, um auf einem Magnetband (11) benachbarte Spuren zu bestimmen, wobei die Spuren Anfangspunkte aufweisen, die in Kopfabtastrichtung um einen Abstand d abweichen und
einer Aufnahmeeinrichtung (1 bis 9, 21,22), um den Drehköpfen (10a, 10b) Hilfs-, Video- und Audioinformationen, die auf den Spuren auf dem Magnetband (11) aufzuzeichnen sind, zuzuführen,
wobei die Aufnahmeeinrichtung
eine Einrichtung (2, 4) zum Erzeugen eines ersten Digitalsignals, das Video- und Audiosignale aufweist, die nacheinanderfolgend in Zeitteilungsweise angeordnet sind,
eine Einrichtung (21, 22) zum Erzeugen eines zweiten Digitalsignals, das Hilfsdaten entspricht, und
eine Multiplexeinrichtung (5, 6) aufweist, um die ersten und zweiten Digitalsignale in mehrere Kanalsignale (a, b) aufzuteilen, die mittels jeweils einem der Drehköpfe (10a, 10b) auf jeweiligen Spuren auf dem Band (11) aufzuzeichnen sind, wodurch jede Spur nacheinander aufgezeichnete Hilfs-, Video- und Audiodatenbereiche aufweist, wobei das Hilfsdatensignal auf dem Startabschnitt mit der Länge (GL-d) in Kopfabtastrichtung der Spur, die durch einen vorangegangenen der Drehköpfe (10a) ausgebildet ist, und
den Endabschnitt mit der Länge (GL-d) in Kopfabtastrichtung der Spur beschränkt ist, der durch den nachfolgenden der Drehköpfe (10b) ausgebildet ist, wobei die Videoaufnahmebereiche und die Audioaufnahmebereiche auf benachbarten Spuren in Kopfabtastrichtung um (GL-d) beabstandet sind.

2. Gerät nach Anspruch 1, bei dem der vorbestimmte Abstand in Kopfabtastrichtung der Abstand zwischen Kopfspalten benachbarter Köpfe (10a, 10b) ist.

3. Gerät nach Anspruch 1 oder 2, bei dem die Zahl der Drehköpfe (10a, 10b) zwei beträgt und die Azimutwinkel der Drehköpfe (10a, 10b) voneinander verschieden sind.

## Revendications

1. Enregistreur de bande vidéo comprenant :
- une paire de têtes tournantes (10a, 10b) situées avec un espacement prédéterminé dans une direction de pas de piste et une distance prédéterminée GL dans une direction de balayage de tête et formées, de façon intégrale, sous la forme d'un corps pour définir des pistes adjacentes sur une bande magnétique (11), les pistes possédant des points de départ qui sont différents d'une distance d dans la direction de balayage des têtes; et
- des moyens d'enregistrement (1 à 9, 21, 22) pour fournir aux têtes tournantes (10a, 10b) une information auxiliaire, vidéo et audio à enregistrer sur les pistes de la bande magnétique (11);
les moyens d'enregistrement comprenant :
- des moyens (2 à 4) pour produire un premier signal numérique comprenant des données vidéo et audio agencées, de façon séquentielle, par division dans le temps;
- des moyens (21, 22) pour produire un second signal numérique représentant des données auxiliaires; et
- des moyens de multiplexage (5, 6) pour diviser lesdits premier et second signaux numériques en plusieurs signaux de canal (a, b) à enregistrer sur des pistes respectives de la bande (11) par des têtes respectives des têtes tournantes (10a, 10b), chaque piste comprenant ainsi des zones de données auxiliaires vidéo et audio enregistrées de façon séquentielle, ledit signal auxiliaire de données étant confiné à la partie de départ de la longueur (GL - d) dans la direction de balayage des têtes de la piste formée par une tête précédente (10a) des têtes tournantes (10a, 10b) et a la partie de fin de la longueur (GL - d) dans la direction de balayage de tête de la piste formée par la tête suivante (10b) des têtes tournantes (10a, 10b), les zones d'enregistrement vidéo et les zones d'enregistrement audio sur les pistes adjacentes etant espacées de (GL - d) dans la direction de balayage des têtes.

2. Dispositif selon la revendication 1, dans lequel ladite distance prédéterminée dans la direction de balayage de tète est la distance entre des intervalles de tête des têtes tournantes (10a, 10b) adjacentes.

3. Dispositifs selon la revendication 1 ou 2, dans lequel le nombre des têtes tournantes (10a, 10b) est de 2 et les angles d'azimut des têtes tournantes (10a, 10b) sont différents l'un de l'autre.
